# EUROPEAN PATENT SPECIFICATION

(11) **EP 4 359 299 B1**
(45) Date of publication and mention of the grant of the patent: **29.04.2026**
(21) Application number: 22733069.3
(22) Date of filing: 13.06.2022
(51) Int. Cl.: B63H 21/38, C10L 1/02, C10L 1/12, F02B 47/02, F02M 25/025, F02D 19/06, F02M 37/00, F02M 63/02, F02M 55/00, F22B 33/00, B63J 99/00

(54) **METHOD AND ARRANGEMENT FOR HANDLING VENT GAS MIXTURE**
VERFAHREN UND ANORDNUNG ZUR BEHANDLUNG VON VENTGASGEMISCH
PROCÉDÉ ET DISPOSITIF DE TRAITEMENT DE GAZ D'ÉVENT

(30) Priority: 24.06.2021 EP 21181558
(43) Date of publication of application: 01.05.2024
(73) Proprietor: Alfa Laval Corporate AB, 221 00 Lund (SE)
(72) Inventor: MØRCH SØRENSEN, Torben, 9000 AALBORG (DK); MØLGAARD, Søren, 9530 STØVRING (DK); ANDERSEN, Lars Bo, 8860 ULSTRUP (DK)
(74) Representative: Alfa Laval Attorneys
(86) International application number: PCT/EP2022/066023
(87) International publication number: WO 2022/268557

(56) References cited:
- WO-A1-79/00909
- JP-A- 2009 056 380
- JP-A- 2015 221 645
- JP-A- S55 129 696
- US-A1- 2012 291 879
- US-A1- 2016 123 285
- US-A1- 2016 298 554

## Description

### Field of invention

The invention relates to a method for handling a vent gas mixture, which comprises fuel vapours of a fuel and inert gas, and which originates from a fuel system. In this context it may be noted that the fuel may be a fuel used as fuel in an engine propelling a ship, and/or the fuel may be a fuel stored as cargo and transported by a ship. The invention also relates to an arrangement for handling such a vent gas mixture.

### Technical Background

Marine engines powered by oil or gas are well known in the art. Oil and gas fired boilers for marine steam production are also well known in the art. Usually, the choice of fuel for the boiler operation is made in relation to the fuels selected for the marine engine operation. Thus, if the marine engine is powered by oil, the boiler is often powered by oil as well. However, the marine engine and the boiler may be powered by different fuels.

One drawback with most of the marine engines of today is marine air pollution, especially carbon dioxide (CO₂), emitted from the marine engines when providing propulsion power. It is generally agreed that the CO₂ emissions, as well as other greenhouse gas emissions, have to be decreased in view of environmental aspects. As a solution, alternative fuels are gaining traction in the marine industry. This includes fuels like methanol, hydrogen, ammonia or conversion of biomaterials. However, by introducing alternative fuels, other problems may occur.

For instance, when handling methanol as a fuel and/or as a cargo, several problems related to methanol vapours occur. When a tank is to be emptied, such as for inspection, methanol vapour in the tank is vented using an inert gas, such as nitrogen. After the methanol vapour has been removed, the tank may be filled with air such that the inspection may be performed. When the tank is to be filled with methanol, the air is removed using inert gas, such as nitrogen, and when the oxygen has been removed, methanol may be filled into the tank. When the methanol is filled into the tank, pressure of inert gas and methanol vapour builds up and need to be released as vent gas. This pressure build-up also occurs when an additional amount of methanol is filled into an already partly filled tank, such as e.g., during bunkering or refuelling.

Thus, although the alternative fuels may be more environmentally friendly regarding greenhouse gas emissions compared to the conventional fuels, there are still other problems that need to be overcome, such as e.g., an effective and environmentally friendly way of disposing vent gases.

There are a number of different approaches and attempts of disposing vent gases, especially in the context of VOC:s, volatile organic compounds.

In US 7,032,390 B2 there is disclosed a complicated system where recovered, compressed VOC gas is used as fuel for a steam system where the steam produced is used for operation of one or more compressors that are used for the compression of the VOC gas.

WO 2019/017796 discloses a low emission oil tanker fuelled with surplus of volatile organic compound. The tanker comprises a load tank adapted to carry a load emitting a VOC gas, a VOC capturing and recovery device being arranged to capture at least a first portion of VOC emitted from said load, and including a VOC processing device arranged to recover and output at least a second VOC portion of the at least a first portion of VOC as liquefied VOC, LVOC, on a first output and output surplus VOC, SVOC, on a second output. The tanker further comprises a gas fuelled high power otto motor type propulsion engine with a fuel gas input, and an engine fuelling arrangement comprising a LNG storage means, a LNG vaporizer, a vaporizer output arranged to feed vaporized LNG to the fuel gas input, and a fuel gas mixer arranged between the vaporizer output and the fuel gas input. The gas fuel mixer has a mixer input in communication with the second output of the gas capturing and recovery device for introduction of the SVOC into the gas fuel mixer.

WO 2012/165968 discloses a method and system for treating cargo vapours from crude oil and petroleum products tanks, wherein the cargo vapours are separated into liquid VOC and surplus VOC. The document further discloses that compressed air, the surplus VOC and the LVOC are fed to a combustion chamber. The LVOC is fed to the combustion chamber as a pilot fuel, and the compressed air, surplus VOC and LVOC are then combusted in the combustion chamber. The combustion is used for operating a generator to generate electrical power.

US 2012/0291879 A1 discloses a method and apparatus for treating vent gas from a store containing a cargo of hydrocarbon blanketed with inert blanket gas. In the document it is disclosed that loading of crude oil into a storage tank causes vent gas comprising a mixture of VOC and inert gas to be vented from the tank. The vent gas is compressed and delivered to a burner of a boiler. The burner also receives a supply of oil as a support fuel to provide stable combustion, the supply of oil being adjusted automatically according to the Wobbe Index and flow rate of the vent gas. Steam generated in the boiler from the burning of the fuels is used to heat the oil, to counter waxiness, or for other purposes.

JP2009056380 A discloses a method for processing a vent gas mixture from a fuel system.

However, as will be apparent in the following, none of them provides an adequate solution. Especially, none of them provides an adequate solution concerning an efficient and environmentally friendly disposal of vent gases in association with the use of alternative fuels, such as alcohol-based fuels. The solution should preferably be robust and require a minimum of design considerations when it comes to the design of related systems.

### Summary of invention

It is an object of the invention to provide a solution addressing at least some of the design criteria that it should provide an environmentally friendly manner of disposing vent gases, that it should be robust, and that it should require a minimum of design changes of related systems.

This object has been achieved by a method for handling a vent gas mixture comprising fuel vapours of a fuel and inert gas, the vent gas mixture originating from a fuel system, the method comprising:
directing the vent gas mixture from the fuel system to a condenser, the condenser condensing at least a majority of the fuel vapours into liquid fuel such that the vent gas mixture comprises liquid fuel and inert gas,
separating the liquid fuel and the inert gas of the vent gas mixture from the condenser in a vapour-liquid separator, and
selectively directing the liquid fuel from the vapour-liquid separator to a boiler system, when the boiler system is in a hot condition and is ready to receive and combust the liquid fuel of the vent gas mixture, or
storing the liquid fuel in the vapour-liquid separator and/or in a separate storage tank until the boiler system is in the hot condition and is ready to receive and combust the liquid fuel of the vent gas mixture.

By directing the gas vent mixture to a condenser condensing the fuel vapour into liquid fuel such that the vent gas mixture comprises liquid fuel and inert gas and separating the liquid fuel and the inert gas of the vent gas mixture from the condenser in a vapour-liquid separator, it is possible to dispose the inert gas separately and to further handle the now liquid fuel in a robust and efficient manner. It should be noted that the condenser may condense all of the fuel vapour or alternatively condense a fraction of the fuel vapour into liquid fuel, in which case the fraction constitutes a majority of the fuel vapour. The size of the fraction may e.g., depend on the time the fuel vapour is present in the condenser and/or a temperature of a cooling media used in the condensing process. Preferably, in order to condense as much fuel vapour as possible, the temperature of the cooling media should be significant below a temperature of the fuel in the tank and/or piping from which the fuel vapour originates. The now liquid fuel also separated from the vent gas mixture occupies a significantly smaller volume and is easier to handle and store, compared to the gaseous vent gas mixture. The now liquid fuel may be transferred to the boiler system and be introduced via nozzles of liquid fuels to the burner. Thereby it is made easy to selectively direct the liquid fuel from the vapour-liquid separator to a boiler system, when the boiler system is in a hot condition and is ready to receive and combust the liquid fuel of the vent gas mixture or store the liquid fuel in the vapour-liquid separator and/or in a separate storage tank until the boiler system is in the hot condition and is ready to receive and combust the liquid fuel of the vent gas mixture.

Since the liquid fuel of the vent gas mixture may easily be stored, it is possible to allow the boiler system to be operated more or less solely based on the need for heat and/or steam and it is possible to wait with combustion of the liquid fuel until the normal running conditions of the boiler system allows for a combustion of the liquid fuel. Moreover, the fact that the fuel may be transferred and be introduced to the burner of the boiler system via a nozzle for liquid fuels makes the arrangement versatile, since most boiler systems and burners are capable of combusting a fuel supplied as a liquid, either as a self-sustained flame or via a pilot flame or primary flame, and in most cases, it is simply a matter of choosing a suitable nozzle for a proper introduction of the liquid fuel to the burner of the boiler system. Since the inert gas has been separated from the fuel vapour it is often possible to simply vent the inert gas to atmosphere.

In this context it may be noted that the fuel may be a fuel used as fuel in an engine propelling a ship. The fuel system may in such a case include a tank and piping to the tank used for filling the tank and piping from the tank used to provide fuel from the tank to the engine. This filling operation is sometimes referred to as bunkering. Alternatively, the fuel may be a fuel stored as cargo and transported by a ship. The fuel system may in such a case include the tank and piping to and from the tank used to fill and empty the tank. It may also be noted that the fuel used as fuel in the engine propelling the ship may be the same fuel stored as cargo and transported by the ship or may alternatively be a different fuel. In case the same fuel is used both as fuel for the engine propelling the ship and transported as cargo by the ship, it is conceivable to have a single arrangement handling vent gas mixture both from the fuel system related to the fuel as a propellant and to the fuel system related to the fuel as a cargo. It is also conceivable to have a single arrangement handling vent gas mixture both from the fuel system related to the fuel as a propellant and to the fuel system related to the fuel as a cargo even though the fuels are different, as long as they have similar properties. This latter may e.g., be the case if the propellant fuel is a first alcohol, such as methanol, and the cargo is another alcohol, or an alcohol-based product. It is also conceivable that there is a hybrid arrangement where some parts of the respective arrangement are common for both arrangement and where some other parts are separate and unique for the respective arrangement. The vent gases may also originate from a so-called cofferdam construction acting as a secondary barrier and extending fully or partly around a fuel tank. Any leakage of vapour fuel from the fuel tank into the cofferdam may be vented using an inert gas, whereby there is a vent gas mixture comprising fuel vapours of a fuel and inert gas. It may also be noted that the method may also be used to handling other kinds of vent gases comprising fuel vapours of a fuel and inert gas, such as from leaking tanks, or fuel systems, or the like, or from other kinds of deliberate or accidental actions where fuel vapours are vented using inert gas. It may also be noted that the vent gas mixture may also include liquid fractions, such as e.g., droplets of fuel suspended in the gas. The condenser may also be referred to as being a heat exchanger configured to dissipate heat to the environment such that the fuel vapours in the heat exchanger condenses to liquid.

Preferred embodiments appear in the dependent claims and in the description.

The fuel is preferably an alcohol. Most preferably the fuel is methanol.

The method may further comprise directing the inert gas of the vent gas mixture from the vapour-liquid separator to atmosphere. This is a convenient manner of disposing the inert gas and since the fuel vapor has efficiently been separated from the inert gas by the condenser and liquid-vapour separator, it is an environmentally friendly approach. However, it should be noted that venting the inert gas to atmosphere is dependent upon on the fraction of the vapour fuel condensed in the condenser being sufficiently large, or alternatively expressed, the amount of fuel vapour still present need to be sufficiently small to allow the gas fraction to be vented into atmosphere.

However, the inventive concept does not exclude that the inert gas is handled in a different manner instead of being vented to atmosphere. In any case the above discussed condensation and liquid-vapour-separation facilitates the handling of the fuel content in the vent gas mixture and it facilitates the handling of the gas fraction.

In a preferred embodiment, the vent gas mixture originates from a fuel tank of the fuel system.

In one preferred embodiment, the vent gas mixture is directed from the fuel system to the condenser in response to an action of emptying a fuel tank, which action includes venting fuel vapours from the tank with said inert gas. Before procedures like fuel tank inspections or when another fuel is to be filled into the fuel tank, the fuel tank has to be emptied from fuel and the fuel vapours are vented with inert gas, which will result in a vent gas mixture of fuel vapours of the fuel and inert gas.

In one embodiment, the vent gas mixture is directed from the fuel system to the condenser in response to a pressure build-up in response to an action of filling fuel to a fuel tank. When the fuel tank is to be filled with fuel, e.g., after fuel tank inspection or changes of fuel, the tanks are first filled with inert gas. When there is no oxygen in the tank, fuel may be filled or bunkered into the tank. When filling or bunkering fuel in the tank, a pressure build-up will happen. In this context, the pressure build-up is released by allowing a mixture of fuel vapour and inert gas to be vented and thereby forming the vent gas mixture. Filling may in this context be referred to a first filling of a previously emptied tank or may alternatively refer to filling of an additional amount of fuel to a tank already partly filled with the fuel. The action of filling fuel to a fuel tank may in some cases be referred to as bunkering.

In one embodiment, the vent gas mixture is directed from the fuel system to the condenser in response to a leakage in the fuel system. This is advantageous in that it allows for a security system for the fuel system, wherein the vent gas mixture is disposed to the boiler system if a leakage in the fuel system occurs. The leakage may e.g., occur from one or more tanks. The one or more tanks may partly or fully be surrounded by a cofferdam. The cofferdam may act as a second barrier with purpose to enclose a potential leak, and the vent gas mixture may e.g., be gas vented from the cofferdam in response to a leakage of fuel or fuel vapour from the tank to the cofferdam.

The method may further comprise igniting a self-sustained flame of the liquid fuel of the vent gas mixture. This flame may be ignited by spark ignition and/or with the use of a pilot flame. This may be used if the flame of the vent gas mixture is self-sustained. This may e.g., be applicable if the vent gas mixture in question concerns a liquid phase and if the liquid phase as such is capable of sustaining a flame or if the liquid phase is capable of sustaining a flame when a secondary fuel, such as an alcohol, preferably the same alcohol, is added in such an amount that the resulting mixture of the liquid phase of the purge mixture and secondary fuel becomes capable of sustaining a flame.

The method may further comprise
igniting a support flame and combusting the liquid fuel of the vent gas mixture using the support flame, or
combusting the liquid fuel of the vent gas mixture using a primary flame of the boiler system as a support flame.

The support flame or primary flame may e.g., be accomplished by burning hydrogen, methane, methanol, ammonia or ISO8217 compliant fuel.

If the flame of the vent gas mixture is not self-sustained, it is necessary to provide some kind of support flame. This may be a separate support flame or alternatively the primary flame may be used as a support flame. The boiler system may be configured to ignite a support flame by first igniting a pilot flame and then igniting the support flame from the pilot flame or, if a pilot flame is sustained, directly ignite the support flame from the pilot. Even if the flame of the purge mixture is self-sustained it may be useful to provide a support flame.

The method may further comprise bypassing the condenser and the vapour-liquid separator by directing, preferably selectively directing, the vent gas mixture from the fuel system to the boiler system, when the boiler system is in the hot condition and is ready to receive and combust the vent gas mixture. This allows for a quick disposal of the vent gas mixture in those cases the boiler system is in the hot condition and is ready to receive and combust the vent gas mixture

Bypassing the condenser and the vapour-liquid separator may include directing the vent gas mixture from the fuel system via a heat exchanger and a gas valve train to the boiler system, wherein the heat exchanger fully evaporates any liquid phase of the vent gas mixture. It is preferred that the heat exchanger fully evaporates any liquid phase of the vent gas mixture to ensure that the vent gas mixture is purely in gas phase when being supplied to the boiler system. Thereby, the vent gas mixture is able to be efficiently combusted.

The inert gas is preferably nitrogen.

The above object has also been achieved by an arrangement for handling a vent gas mixture comprising fuel vapours of a fuel and inert gas, the vent gas mixture originating from a fuel system, the arrangement comprising:
a boiler system, and
a vent gas handling system,
wherein the boiler system comprises
   a burner, and
   a fuel inlet configured to selectively supply a fuel and thereby selectively sustain a primary flame in the burner for production of heat and/or steam in the boiler system,
wherein the vent gas handling system comprises
   a condenser for condensing the fuel vapours in gas phase into liquid fuel,
   a vapour-liquid separator for separating the liquid fuel and the inert gas,
wherein the arrangement further comprises piping configured to
direct the vent gas mixture from the fuel system to the condenser condensing the fuel vapours into liquid fuel such that the vent gas mixture comprises liquid fuel and inert gas,
direct the vent gas mixture from the condenser to the vapour-liquid separator separating the liquid fuel and the inert gas, and
selectively direct the liquid fuel from the vapour-liquid separator to the boiler system, when the boiler system is in a hot condition and is ready to receive and combust the liquid fuel of the vent gas mixture, or
store the liquid fuel in the vapour-liquid separator and/or in a separate storage tank until the boiler system is in the hot condition and is ready to receive and combust the liquid fuel of the vent gas mixture.

The advantages associated with the various features have been discussed in relation to the method above, and those advantages are equally applicable to the arrangement.

The fuel inlet may be connected via a fuel supply line to a fuel source. The fuel source is preferably configured to supply a fuel for a primary flame. The fuel is preferably selected from the group consisting of liquefied natural gas (LNG), distillate and residual fuels.

In one embodiment, the boiler system is configured to ignite a self-sustained flame of the liquid fuel of the vent gas mixture.

In one embodiment, the boiler system is configured
to ignite a support flame and to combust the liquid fuel of the vent gas mixture using said support flame, or
to combust the liquid fuel of the vent gas mixture using a primary flame as a support flame.

The burner may be a multi-fuel burner system configured
to burn at least two different fuels, preferably one at the time, or
to burn one or more liquids fuels in combination with burning one or more gaseous fuels, wherein the one or more liquid fuels, preferably one liquid fuel at the time, is burnt simultaneously as the one or more gaseous fuels, preferably one gaseous fuel at the time, is burnt.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will by way of example be described in more detail with reference to the appended schematic drawings, which shows a presently preferred embodiment of the invention.
Figure 1 schematically discloses an arrangement for handling a vent gas mixture, which comprises fuel vapours of a fuel and inert gas.
Figure 2 schematically discloses a method for handling a vent gas mixture, which comprises fuel vapours of a fuel and inert gas.

### Detailed description of preferred embodiments

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

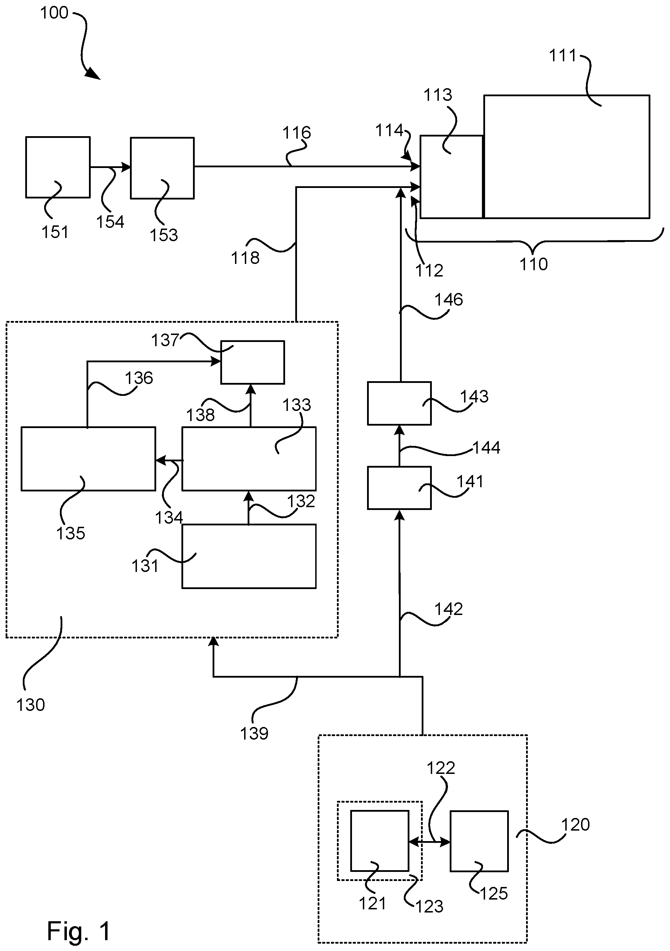

With reference to figure 1, there is disclosed an arrangement 100 for handling a vent gas mixture comprising fuel vapours of a fuel and inert gas. The fuel may be an alcohol or an alcohol-based fuel. Preferably, the fuel is methanol. The fuel may be used as a fuel in an engine propelling a ship. Alternatively, the fuel may be a fuel stored as cargo and transported by a ship. It should however be noted that other fuels may be used as well. The inert gas may be nitrogen. It should be noted that the inert gas may be any other inert gas or mixtures of inert gases as well.

The arrangement 100 comprises a boiler system 110, a fuel system and a vent gas handling system 130. The vent gas mixture originates from the fuel system 120.

The boiler system 110 comprises a boiler 111, a burner 113 and a fuel inlet 114. The fuel inlet 114 may be configured to selectively sustain a primary flame in the burner 113 for production of heat and/or steam in the boiler system 110. The fuel inlet 114 is connected via a fuel supply line 116 to a fuel source 151. The fuel source 151 may be configured to supply a fuel for the primary flame in the burner 113. The fuel for the primary flame may liquified natural gas (LNG), distillate or residual fuels. However, it should be noted that the fuel may be other fuels as well. The fuel may comprise one or more type of fuels. The fuel source 151 may be configured to supply fuel to the boiler system 110 via a further fuel supply line 154 and a pump 153. The boiler system 110 comprises a further fuel inlet 112. The further fuel inlet 112 is connected via piping 118 to the vent gas handling system 130.

The burner 113 of the boiler system 110 may be a multi-fuel burner system configured to burn at least two different fuels. The burner 113 may be configured to burn one of the at least two different fuels at the time. The burner 113 may be configured to burn one or more liquid fuels in combination with burning one or more gaseous fuels. The one or more liquid fuels may be burnt simultaneously as the one or more gaseous fuels is burnt. Preferably, one liquid fuel of the one or more liquid fuels is burnt simultaneously as one gaseous fuel of the one or more gaseous fuels.

The fuel system 120 comprises a fuel tank 121. As depicted in figure 1, the fuel system 120 further comprises a cofferdam construction 123. The cofferdam construction may act as a secondary barrier and extending fully or partly around a fuel tank 121. The cofferdam 123 may have the purpose to enclose a potential leak in the fuel tank 121. The fuel tank 121 and/or the cofferdam 123 is connected via a supply line 122 to an engine 125 of the fuel system 120. Although not illustrated, the fuel system 121 may comprise more than one fuel tank 121.

The vent gas handling system 130 comprises a condenser 131 for condensing the fuel vapours in gas phase into liquid phase. The vent gas handling system 130 also comprises a vapour-liquid separator 133 for separating the liquid fuel and the inert gas.

The vent gas handling system 130 is connected to the fuel system via a piping 139 and is connected to the boiler system 110 via a piping 118. The piping 139 is configured to direct the vent gas mixture from the fuel system 120 to the vent gas handling system 130. More in detail, the piping 139 is configured to direct the vent gas mixture from the fuel system 120 to the condenser 131 of the vent gas handling system 130. The condenser 131 is configured to condense at least the majority of the fuel vapours into liquid fuel such that the vent gas mixture comprises liquid fuel and inert gas. The condenser 131 is connected to the vapour-liquid separator 133 via a piping 132. Thus, the piping 132 is configured to direct the vent gas mixture from the condenser 131 to the vapour-liquid separator 133. The vapour-liquid separator 133 is configured to separate the liquid fuel and the inert gas. The vapour-liquid separator 133 is connected to a storage tank 135 via a piping 134 and connected to a pump 137 via a piping 138. The storage tank 135 is connected to the one or more fuel pumps 137 via a piping 136.

The vapour-liquid separator 133 is configured to selectively direct the liquid fuel to the boiler system 110 via the pump 137 and the piping when the boiler system 110 is in a hot condition and is ready to receive and combust the liquid fuel of the vent gas mixture.

If the boiler system 110 is not in the hot condition, the vapour-liquid separator 133 is configured to store the liquid fuel until the boiler system 110 is in the hot condition. Alternatively, or in combination, the vapour-liquid separator 133 may be configured to supply the liquid fuel to and store the same in the separate storage tank 135 until the boiler system 110 is in the hot condition. As said, when the boiler system 110 is in the hot condition, it is ready to receive and combust the liquid fuel of the vent gas mixture.

Although not illustrated, when the liquid fuel and inert gas have been separated, the vapour-liquid separator 133 may be configured to direct the inert gas of the vent gas mixture to atmosphere.

The vent gas mixture may be directed from the fuel system 120 to the condenser 131 in response to an action of emptying the fuel tank 121 in the fuel system 120. The action preferably includes venting fuel vapours from the fuel tank 121 with the inert gas. Alternatively, the vent gas mixture may be directed from the fuel system 120 to the condenser 131 in response to a pressure build-up in response to an action of filling fuel to the fuel tank 121. Alternatively, the vent gas mixture may be directed from the fuel system 120 to the condenser 131 in response to a leakage in the fuel system 120.

Referring back to the boiler system 110 which may be further configured to ignite a self-sustained flame of the liquid fuel of the vent gas mixture. Thus, the boiler system 110 may be configured to ignite the support flame and to combust the liquid fuel of the vent gas mixture using the support flame or may be configured to combust the liquid fuel of the vent gas mixture using the primary flame as the support flame.

As further depicted in figure 1, the fuel system 120 may be connected via a piping 142 to a heat exchanger 141. The heat exchanger 141 is configured to fully evaporate any liquid phase of the vent gas mixture. The evaporator 141 is connected via a piping 144 to a gas-vale train 143. The gas-valve train 143 is connected via piping 146 to the boiler system 110. Thus, the arrangement 100 may be configured to direct the vent gas mixture from the fuel system 120 to the boiler system 120 by bypassing the vent gas handling system 130. The vent gas handling system 130 is bypassed by preferably selectively directing the vent gas mixture from the fuel system 120 to the boiler system 130. This may be possible when the boiler system 110 is in the hot condition and is ready to receive and combust the vent gas mixture.

Although the heat exchanger 141and the gas-valve train 143 are depicted in figure 1, they may be omitted from the arrangement 100 such that the fuel system 120 is connected via a piping to the boiler system 110. In this case, the vent gas mixture is introduced directly to the boiler system 110, preferably via a pump, from the fuel system 120.

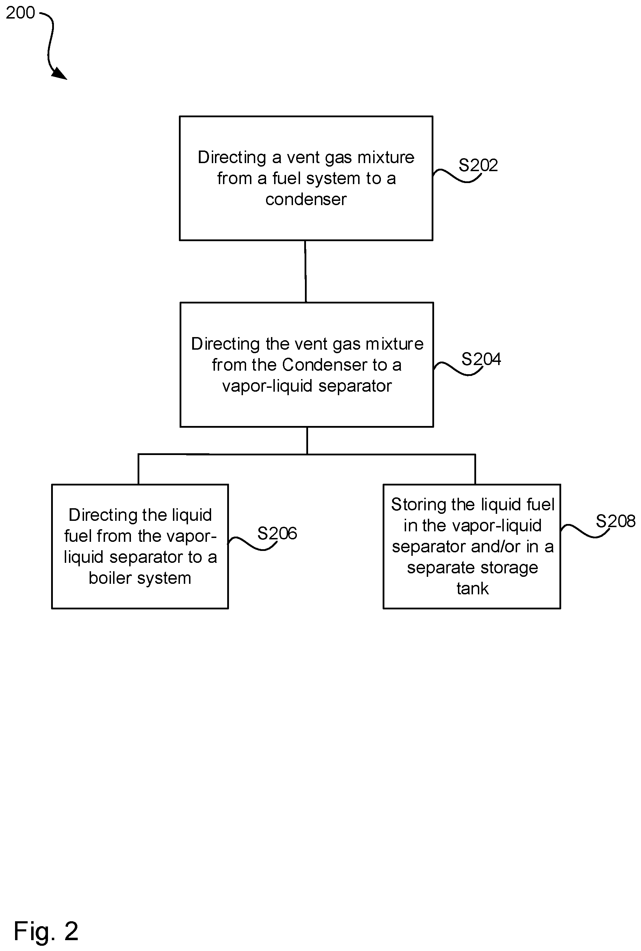

With reference to figure 2, a flow chart 200 illustrating a method for handling vent gas mixture comprising fuel vapours or a fuel and inert gas is shown by way of example.

Generally, a first step S202 of the method 600 may be to directing the vent gas mixture from the fuel system 120 to the condenser 131 being configured to condensing at least a majority of the fuel vapours into liquid fuel. Thereby, the vent gas mixture comprises liquid fuel and inert gas. In a second step S204, the liquid fuel and the inert gas of the vent gas mixture may be separated in the vapour-liquid separator 133.

Thereafter, the method 200 may provide a third step S206 or a fourth step S208 depending on if the boiler system 110 is in a hot condition or not. In the third step S206, when the boiler system 110 is in the hot condition and is ready to receive and combust the liquid fuel of the vent gas mixture, the liquid fuel is selectively directed from the vapour-liquid separator 133 to the boiler system 110. Otherwise, the liquid fuel is stored in the vapour-liquid separator 133 and/or in the separate storage tank 135 of the vent gas handling system 130 until the boiler system 110 is in the hot condition and is ready to receive and combust the liquid fuel of the vent gas mixture.

## Claims

1. A method (200) for handling a vent gas mixture comprising fuel vapours of a fuel and inert gas, the vent gas mixture originating from a fuel system (120), the method (200) comprising:
directing (S202) the vent gas mixture from the fuel system (120) to a condenser (131), the condenser (131) condensing at least a majority of the fuel vapours into liquid fuel such that the vent gas mixture comprises liquid fuel and inert gas,
separating (S204) the liquid fuel and the inert gas of the vent gas mixture from the condenser (131) in a vapour-liquid separator (133), and
selectively directing (S206) the liquid fuel from the vapour-liquid separator (133) to a boiler system (110), when the boiler system (110) is in a hot condition and is ready to receive and combust the liquid fuel of the vent gas mixture, or
storing (S208) the liquid fuel in the vapour-liquid separator (133) and/or in a separate storage tank (135) until the boiler system (110) is in the hot condition and is ready to receive and combust the liquid fuel of the vent gas mixture.

2. The method (200) according to claim 1, wherein the fuel is an alcohol, preferably methanol.

3. The method (200) according to claim 1 or 2, further comprising directing the inert gas of the vent gas mixture from the vapour-liquid separator (133) to atmosphere.

4. The method (200) according to any one of the preceding claims, wherein the vent gas mixture originates from a fuel tank (121) of the fuel system (120).

5. The method (200) according to any one of the preceding claims, wherein the vent gas mixture is directed from the fuel system (120) to the condenser (131) in response to an action of emptying a fuel tank (121), which action includes venting fuel vapours from the tank (121) with said inert gas.

6. The method (200) according to any one of claims 1 to 4, wherein the vent gas mixture is directed from the fuel system (120) to the condenser (131) in response to a pressure build-up in response to an action of filling fuel to a fuel tank (121).

7. The method (200) according to any one of claims 1 to 4, wherein the vent gas mixture is directed from the fuel system (120) to the condenser (131) in response to a leakage in the fuel system (120).

8. The method (200) according to any one of the preceding claims, further comprising igniting a self-sustained flame of the liquid fuel of the vent gas mixture.

9. The method (200) according to any one of claims 1 to 7, further comprising
igniting a support flame and combusting the liquid fuel of the vent gas mixture using the support flame, or
combusting the liquid fuel of the vent gas mixture using a primary flame of the boiler system as a support flame.

10. The method (200) according to any one of the preceding claims, further comprising
bypassing the condenser (131) and the vapour-liquid separator (133) by directing, preferably selectively directing, the vent gas mixture from the fuel system (120) to the boiler system (110), when the boiler system (110) is in the hot condition and is ready to receive and combust the vent gas mixture.

11. The method (200) according to claim 10, wherein bypassing the condenser (131) and the vapour-liquid separator (133) includes directing the vent gas mixture from the fuel system (120) via a heat exchanger (141) and a gas valve train (143) to the boiler system (110), wherein the heat exchanger (141) at least partly, preferably fully, evaporates any liquid phase of the vent gas mixture.

12. The method (200) according to any one of the preceding claims, wherein the inert gas is nitrogen.

13. An arrangement (100) for handling a vent gas mixture comprising fuel vapours of a fuel and inert gas, the vent gas mixture originating from a fuel system (120), the arrangement comprising:
a boiler system (110), and
a vent gas handling system (130),
wherein the boiler system (110) comprises
a burner (113), and
a fuel inlet (114) configured to selectively supply a fuel and thereby selectively sustain a primary flame in the burner (113) for production of heat and/or steam in the boiler system (110),
wherein the vent gas handling system (130) comprises
a condenser (131) for condensing the fuel vapours in gas phase into liquid fuel, and
a vapour-liquid separator (133) for separating the liquid fuel and the inert gas,
wherein the arrangement (100) further comprises piping (139) configured to
direct the vent gas mixture from the fuel system (120) to the condenser (131) condensing the fuel vapours into liquid fuel such that the vent gas mixture comprises liquid fuel and inert gas, and piping (132) configured to
direct the vent gas mixture from the condenser (131) to the vapour-liquid separator (133) separating the liquid fuel and the inert gas, and wherein the vapour-liquid separator is configured to
selectively direct the liquid fuel from the vapour-liquid separator (133) to the boiler system (110), when the boiler system (110) is in a hot condition and is ready to receive and combust the liquid fuel of the vent gas mixture, or
store the liquid fuel in the vapour-liquid separator (133) and/or in a separate storage tank (135) until the boiler system (110) is in the hot condition and is ready to receive and combust the liquid fuel of the vent gas mixture.

14. The arrangement (100) according to claim 13, wherein the fuel inlet (114) is connected via a fuel supply line (116) to a fuel source (151), the fuel source (151) being configured to supply a fuel for a primary flame, the fuel being selected from the group consisting of liquefied natural gas (LNG), distillate and residual fuels.

15. The arrangement (100) according to claims 13 or 14, wherein the boiler system (110) is configured to ignite a self-sustained flame of the liquid fuel of the vent gas mixture.

16. The arrangement (100) according to claims 13 or 14, wherein the boiler system (110) is configured
to ignite a support flame and to combust the liquid fuel of the vent gas mixture using said support flame, or
to combust the liquid fuel of the vent gas mixture using a primary flame as a support flame.

17. The arrangement (100) according to any one of claims 13-16, wherein the burner (113) is a multi-fuel burner system configured
to burn at least two different fuels, preferably one at the time, or
to burn one or more liquids fuels in combination with burning one or more gaseous fuels, wherein the one or more liquid fuels, preferably one liquid fuel at the time, is burnt simultaneously as the one or more gaseous fuels, preferably one gaseous fuel at the time, is burnt.

## Patentansprüche

1. Verfahren (200) zur Behandlung eines Entlüftungsgasgemisches, das Brennstoffdämpfe eines Brennstoffs und Inertgas umfasst, wobei das Entlüftungsgasgemisch aus einem Brennstoffsystem (120) stammt, wobei das Verfahren (200) Folgendes umfasst:
Leiten (5202) des Entlüftungsgasgemisches aus dem Brennstoffsystem (120) zu einem Kondensator (131), wobei der Kondensator (131) mindestens einen größten Teil der Brennstoffdämpfe zu flüssigem Brennstoff kondensiert, sodass das Entlüftungsgasgemisch flüssigen Brennstoff und Inertgas umfasst,
Trennen (S204) des flüssigen Brennstoffs und des Inertgases des Entlüftungsgasgemisches aus dem Kondensator (131) in einem Dampf-Flüssigkeit-Abscheider (133), und
selektives Leiten (S206) des flüssigen Brennstoffs vom Dampf-Flüssigkeit-Abscheider (133) zu einem Kesselsystem (110), wenn sich das Kesselsystem (110) in einem heißen Zustand befindet und bereit ist, den flüssigen Brennstoff des Entlüftungsgasgemisches aufzunehmen und zu verbrennen, oder
Speichern (S208) des flüssigen Brennstoffs im Dampf-Flüssigkeit-Abscheider (133) und/oder in einem separaten Vorratsbehälter (135), bis sich das Kesselsystem (110) im heißen Zustand befindet und bereit ist, den flüssigen Brennstoff aus dem Entlüftungsgasgemisch aufzunehmen und zu verbrennen.

2. Verfahren (200) nach Anspruch 1, wobei der Brennstoff ein Alkohol, vorzugsweise Methanol, ist.

3. Verfahren (200) nach Anspruch 1 oder 2, weiter umfassend Leiten des Inertgases des Entlüftungsgasgemisches aus dem Dampf-Flüssigkeit-Abscheider (133) zur Atmosphäre.

4. Verfahren (200) nach einem der vorstehenden Ansprüche, wobei das Entlüftungsgasgemisch aus einem Brennstofftank (121) des Brennstoffsystems (120) stammt.

5. Verfahren (200) nach einem der vorstehenden Ansprüche, wobei das Entlüftungsgasgemisch als Reaktion auf einen Vorgang des Entleerens eines Brennstofftanks (121) aus dem Brennstoffsystem (120) zum Kondensator (131) geleitet wird, wobei der Vorgang Entlüften von Brennstoffdämpfen aus dem Tank (121) mit Inertgas einschließt.

6. Verfahren (200) nach einem der Ansprüche 1 bis 4, wobei das Entlüftungsgasgemisch als Reaktion auf einen Druckaufbau als Reaktion auf einen Vorgang des Befüllens eines Brennstofftanks (121) aus dem Brennstoffsystem (120) zum Kondensator (131) geleitet wird.

7. Verfahren (200) nach einem der Ansprüche 1 bis 4, wobei das Entlüftungsgasgemisch als Reaktion auf ein Leck im Brennstoffsystem (120) vom Brennstoffsystem (120) zum Kondensator (131) geleitet wird.

8. Verfahren (200) nach einem der vorstehenden Ansprüche, weiter umfassend Entzünden einer selbsterhaltenden Flamme des flüssigen Brennstoffs des Entlüftungsgasgemisches.

9. Verfahren (200) nach einem der Ansprüche 1 bis 7, weiter umfassend
Entzünden einer Hilfsflamme und Verbrennen des flüssigen Brennstoffs des Entlüftungsgasgemisches unter Verwendung der Hilfsflamme, oder
Verbrennung des flüssigen Brennstoffs aus dem Entlüftungsgasgemisch unter Verwendung einer Primärflamme des Kesselsystems als Hilfsflamme.

10. Verfahren (200) nach einem der vorstehenden Ansprüche, weiter umfassend
Umgehen des Kondensators (131) und des Dampf-Flüssigkeit-Abscheiders (133) durch Leiten, vorzugsweise selektives Leiten, des Entlüftungsgasgemisches aus dem Brennstoffsystem (120) zum Kesselsystem (110), wenn sich das Kesselsystem (110) im heißen Zustand befindet und bereit ist, das Entlüftungsgasgemisch aufzunehmen und zu verbrennen.

11. Verfahren (200) nach Anspruch 10, wobei Umgehen des Kondensators (131) und des Dampf-Flüssigkeit-Abscheiders (133) Leiten des Entlüftungsgasgemisches aus dem Brennstoffsystem (120) über einen Wärmetauscher (141) und einen Gasventilzug (143) zum Kesselsystem (110) einschließt, wobei der Wärmetauscher (141) mindestens teilweise, vorzugsweise vollständig, jede flüssige Phase des Entlüftungsgasgemisches verdampft.

12. Verfahren (200) nach einem der vorstehenden Ansprüche, wobei das Inertgas Stickstoff ist.

13. Anordnung (100) zum Behandeln eines Entlüftungsgasgemisches, das Brennstoffdämpfe eines Brennstoffs und Inertgas umfasst, wobei das Entlüftungsgasgemisch aus einem Brennstoffsystem (120) stammt, wobei die Anordnung Folgendes umfasst:
eine Kesselanlage (110) und
ein Entlüftungsgasbehandlungssystem (130),
wobei das Kesselsystem (110) Folgendes umfasst:
einen Brenner (113) und
einen Brennstoffeinlass (114), der so konfiguriert ist, dass er selektiv einen Brennstoff zuführt und dadurch selektiv eine Primärflamme im Brenner (113) zur Erzeugung von Wärme und/oder Dampf im Kesselsystem (110) aufrechterhält,
wobei das Entlüftungsgasbehandlungssystem (130) Folgendes umfasst:
einen Kondensator (131) zum Kondensieren der Brennstoffdämpfe in der Gasphase zu flüssigem Brennstoff und
einen Dampf-Flüssigkeit-Abscheider (133) zum Trennen des flüssigen Brennstoffs und des Inertgases,
wobei die Anordnung (100) weiter Rohrleitungen (139) umfasst, die so konfiguriert sind, dass
das Entlüftungsgasgemisch aus dem Brennstoffsystem (120) zum Kondensator (131) geleitet wird, der die Brennstoffdämpfe zu flüssigem Brennstoff kondensiert, sodass das Entlüftungsgasgemisch flüssigen Brennstoff und Inertgas umfasst, und die Rohrleitungen (132) so konfiguriert sind, dass sie
das Entlüftungsgasgemisch vom Kondensator (131) zum Dampf-Flüssigkeit-Abscheider (133) leiten, der den flüssigen Brennstoff und das Inertgas trennt, wobei der Dampf-Flüssigkeit-Abscheider so konfiguriert ist, dass er
den flüssigen Brennstoff selektiv vom Dampf-Flüssigkeit-Abscheider (133) zum Kesselsystem (110) leitet, wenn sich das Kesselsystem (110) in einem heißen Zustand befindet und bereit ist, den flüssigen Brennstoff des Entlüftungsgasgemisches aufzunehmen und zu verbrennen, oder
den flüssigen Brennstoff im Dampf-Flüssigkeit-Abscheider (133) und/oder in einem separaten Vorratsbehälter (135) lagert, bis sich das Kesselsystem (110) im heißen Zustand befindet und bereit ist, den flüssigen Brennstoff aus dem Entlüftungsgasgemisch aufzunehmen und zu verbrennen.

14. Anordnung (100) nach Anspruch 13, wobei der Brennstoffeinlass (114) über eine Brennstoffzuleitung (116) mit einer Brennstoffquelle (151) verbunden ist, wobei die Brennstoffquelle (151) so konfiguriert ist, dass sie einen Brennstoff für eine Primärflamme liefert, wobei der Brennstoff aus der Gruppe, bestehend aus verflüssigtem Erdgas (LNG), Destillate und Rückstandsbrennstoffen, ausgewählt ist.

15. Anordnung (100) nach Anspruch 13 oder 14, wobei das Kesselsystem (110) so konfiguriert ist, dass es eine selbsterhaltende Flamme des flüssigen Brennstoffs des Entlüftungsgasgemisches entzündet.

16. Anordnung (100) nach Anspruch 13 oder 14, wobei das Kesselsystem (110) so konfiguriert ist, dass es
eine Hilfsflamme entzündet und den flüssigen Brennstoff des Entlüftungsgasgemisches unter Verwendung der Hilfsflamme verbrennt oder
den flüssigen Brennstoff des Entlüftungsgasgemisches unter Verwendung einer Primärflamme als Hilfsflamme verbrennt.

17. Anordnung (100) nach einem der Ansprüche 13 bis 16, wobei der Brenner (113) ein Mehrstoffbrennersystem ist, das so konfiguriert ist, dass es
mindestens zwei verschiedene Brennstoffe, vorzugsweise jeweils einen, verbrennt oder
einen oder mehrere flüssige Brennstoffe in Kombination mit dem Verbrennen eines oder mehrerer gasförmiger Brennstoffe verbrennt, wobei der eine oder die mehreren flüssigen Brennstoffe, vorzugsweise jeweils ein flüssiger Brennstoff, gleichzeitig mit dem einen oder den mehreren gasförmigen Brennstoffen, vorzugsweise jeweils ein gasförmiger Brennstoff, verbrannt werden.

## Revendications

1. Procédé (200) de traitement d'un mélange de gaz d'évent comprenant des vapeurs de combustible d'un combustible et de gaz inerte, le mélange de gaz d'évent provenant d'un système de combustible (120), le procédé (200) comprenant :
le fait de diriger (S202) le mélange de gaz d'évent du système de combustible (120) vers un condenseur (131), le condenseur (131) condensant au moins la majorité des vapeurs de combustible en combustible liquide de sorte que le mélange de gaz d'évent comprenne du combustible liquide et du gaz inerte,
la séparation (S204) du combustible liquide et du gaz inerte du mélange de gaz d'évent du condenseur (131) dans un séparateur vapeur-liquide (133), et
le fait de diriger sélectivement (S206) le combustible liquide provenant du séparateur vapeur-liquide (133) vers un système de chaudière (110), lorsque le système de chaudière (110) est à température élevée et prêt à recevoir et à brûler le combustible liquide du mélange de gaz d'évent, ou
le stockage (S208) du combustible liquide dans le séparateur vapeur-liquide (133) et/ou dans un réservoir de stockage séparé (135) jusqu'à ce que le système de chaudière (110) soit à température élevée et prêt à recevoir et à brûler le combustible liquide du mélange de gaz d'évent.

2. Procédé (200) selon la revendication 1, dans lequel le combustible est un alcool, de préférence le méthanol.

3. Procédé (200) selon la revendication 1 ou 2, comprenant en outre le fait de diriger le gaz inerte du mélange de gaz d'évent du séparateur vapeur-liquide (133) vers l'atmosphère.

4. Procédé (200) selon l'une quelconque des revendications précédentes, dans lequel le mélange de gaz d'évent provient d'un réservoir de combustible (121) du système de combustible (120).

5. Procédé (200) selon l'une quelconque des revendications précédentes, dans lequel le mélange de gaz d'évent est dirigé du système de combustible (120) vers le condenseur (131) en réponse à une action de vidange d'un réservoir de combustible (121), laquelle action inclut l'évacuation des vapeurs de combustible du réservoir (121) avec ledit gaz inerte.

6. Procédé (200) selon l'une quelconque des revendications 1 à 4, dans lequel le mélange de gaz d'évent est dirigé du système de combustible (120) vers le condenseur (131) en réponse à une augmentation de pression en réponse à une action de remplissage de combustible dans un réservoir de combustible (121).

7. Procédé (200) selon l'une quelconque des revendications 1 à 4, dans lequel le mélange de gaz d'évent est dirigé du système de combustible (120) vers le condenseur (131) en réponse à une fuite dans le système de combustible (120).

8. Procédé (200) selon l'une quelconque des revendications précédentes, comprenant en outre l'allumage d'une flamme auto-entretenue du combustible liquide du mélange de gaz d'évent.

9. Procédé (200) selon l'une quelconque des revendications 1 à 7, comprenant en outre
l'allumage d'une flamme de support et la combustion du combustible liquide du mélange de gaz d'évent à l'aide de la flamme de support, ou
la combustion du combustible liquide du mélange de gaz d'évent à l'aide d'une flamme primaire du système de chaudière comme flamme de support.

10. Procédé (200) selon l'une quelconque des revendications précédentes, comprenant en outre
le contournement du condenseur (131) et du séparateur vapeur-liquide (133) en dirigeant, de préférence de manière sélective, le mélange de gaz d'évent du système de combustible (120) vers le système de chaudière (110), lorsque le système de chaudière (110) est à température élevée et prêt à recevoir et à brûler le mélange de gaz d'évent.

11. Procédé (200) selon la revendication 10, dans lequel le contournement du condenseur (131) et du séparateur vapeur-liquide (133) inclut le fait de diriger le mélange de gaz d'évent du système de combustible (120) via un échangeur de chaleur (141) et un train de vannes à gaz (143) vers le système de chaudière (110), dans lequel l'échangeur de chaleur (141) évapore au moins partiellement, de préférence totalement, toute phase liquide du mélange de gaz d'évent.

12. Procédé (200) selon l'une quelconque des revendications précédentes, dans lequel le gaz inerte est l'azote.

13. Agencement (100) de traitement d'un mélange de gaz d'évent comprenant des vapeurs de combustible d'un combustible et de gaz inerte, le mélange de gaz d'évent provenant d'un système de combustible (120), l'agencement comprenant :
un système de chaudière (110), et
un système de traitement de gaz d'évent (130),
dans lequel le système de chaudière (110) comprend
un brûleur (113), et
une entrée de combustible (114) configurée pour alimenter sélectivement en combustible et ainsi maintenir sélectivement une flamme primaire dans le brûleur (113) pour la production de chaleur et/ou de vapeur dans le système de chaudière (110),
dans lequel le système de traitement de gaz d'évent (130) comprend
un condenseur (131) pour condenser les vapeurs de combustible en phase gazeuse en combustible liquide, et
un séparateur vapeur-liquide (133) pour séparer le combustible liquide et le gaz inerte,
dans lequel l'agencement (100) comprend en outre une tuyauterie (139) configurée pour
diriger le mélange de gaz d'évent du système de combustible (120) vers le condenseur (131) condensant les vapeurs de combustible en combustible liquide de sorte que le mélange de gaz d'évent comprenne du combustible liquide et du gaz inerte, et la tuyauterie (132) étant configurée pour
diriger le mélange de gaz d'évent du condenseur (131) vers le séparateur vapeur-liquide (133) séparant le combustible liquide et le gaz inerte, et dans lequel le séparateur vapeur-liquide est configuré pour
diriger sélectivement le combustible liquide provenant du séparateur vapeur-liquide (133) vers le système de chaudière (110), lorsque le système de chaudière (110) est à température élevée et prêt à recevoir et à brûler le combustible liquide du mélange de gaz d'évent, ou
stocker le combustible liquide dans le séparateur vapeur-liquide (133) et/ou dans un réservoir de stockage séparé (135) jusqu'à ce que le système de chaudière (110) soit à température élevée et prêt à recevoir et à brûler le combustible liquide du mélange de gaz d'évent.

14. Agencement (100) selon la revendication 13, dans lequel l'entrée de combustible (114) est reliée par une conduite d'alimentation en combustible (116) à une source de combustible (151), la source de combustible (151) étant configurée pour fournir un combustible pour une flamme primaire, le combustible étant choisi parmi le groupe consistant en gaz naturel liquéfié (GNL), distillats et combustibles résiduels.

15. Agencement (100) selon les revendications 13 ou 14, dans lequel le système de chaudière (110) est configuré pour allumer une flamme auto-entretenue du combustible liquide du mélange de gaz d'évent.

16. Agencement (100) selon les revendications 13 ou 14, dans lequel le système de chaudière (110) est configuré pour
allumer une flamme de support et brûler le combustible liquide du mélange de gaz d'évent à l'aide de ladite flamme de support, ou
brûler le combustible liquide du mélange de gaz d'évent à l'aide d'une flamme primaire comme flamme de support.

17. Agencement (100) selon l'une quelconque des revendications 13-16, dans lequel le brûleur (113) est un système de brûleur multicombustible configuré pour
brûler au moins deux combustibles différents, de préférence un à la fois, ou
brûler un ou plusieurs combustibles liquides en combinaison avec la combustion d'un ou plusieurs combustibles gazeux, dans lequel les un ou plusieurs combustibles liquides, de préférence un combustible liquide à la fois, sont brûlés simultanément avec les un ou plusieurs combustibles gazeux, de préférence un combustible gazeux à la fois.
